# EUROPÄISCHE PATENTSCHRIFT

(11) **EP 0 770 858 B1**
(45) Veröffentlichungstag und Bekanntmachung des Hinweises auf die Patenterteilung: **29.12.1999**
(21) Anmeldenummer: 96109242.6
(22) Anmeldetag: 10.06.1996
(51) Int. Cl.: G01F 1/84

(54) **Coriolis-Massedurchflussaufnehmer mit einem einzigen Messrohr**
Coriolis mass flow sensor with a single measuring tube
Débimètre massique selon Coriolis avec un seul tube de mesure

(30) Priorität: 26.10.1995 EP 95116834
(43) Veröffentlichungstag der Anmeldung: 02.05.1997
(73) Patentinhaber: Endress + Hauser Flowtec AG, CH-4153 Reinach BL 1 (CH)
(72) Erfinder: Bitto, Ennio, 4147 Aesch (CH); Koudal, Ole, 4153 Reinach (BL) (CH); Keita, Mamadi, Dr., 4053 Basel (BS) (CH)
(74) Vertreter: Morstadt, Volker, Dipl.-Ing.

(56) Entgegenhaltungen:
- DE-A- 3 824 351
- US-A- 5 261 284
- US-A- 5 307 689

## Beschreibung

Die Erfindung betrifft Massedurchflußaufnehmer nach dem Coriolis-Prinzip mit einem einzigen Meßrohr.

Mit Massedurchflußmessern lassen sich bekanntlich der Massedurchfluß und/oder die Dichte von Fluiden messen, die in einer Rohrleitung strömen, in die der Massedurchflußaufnehmer eingesetzt ist.

Im Gegensatz zu Coriolis-Massedurchflußaufnehmern mit mindestens zwei Meßrohren, die gegenüber aus der Rohrleitung stammenden Störungen, wie z.B. deren Vibrationen oder starken Druckschwankungen des Fluids, recht gut immun gemacht werden können, sind nur ein einziges Meßrohr aufweisende Coriolis-Massedurchflußaufnehmer gegenüber solchen Störungen, aber auch gegenüber anderen auf sie einwirkenden Störungen, wie z.B. Schlägen gegen das Gehäuse, viel empfindlicher.

Zu diesen Störungen gehören auch Schwingungsanteile, die vom mit einer aktuellen Frequenz schwingenden Meßrohr auf die Rohrleitung übertragen werden, die an deren immer vorhandenen Unstetigkeitsstellen reflektiert werden und die somit wieder zum Meßrohr gelangen. Diese Schwingungsanteile sind besonders störend, weil sie dieselbe aktuelle Frequenz wie das Meßrohr haben. Daher können diese Störungen durch elektronische Maßnahmen überhaupt nicht und durch mechanische Maßnahmen nur schwer beseitigt werden.

In der US-A 53 07 689 ist u.a. ein Massedurchflußmesser nach dem Coriolis-Prinzip beschrieben, der in eine Rohrleitung einfügbar ist und im Betrieb von einem zu messenden Fluid durchströmt wird,
- mit einer Grundplatte,
   -- die über mindestens ein mechanisches Dämpfungselement auf einen Boden gestellt ist,
- mit einem einzigen, in einer zu einer Oberseite der Grundplatte parallelen Ebene U- oder J-förmig gebogenen, vom Fluid durchströmten Meßrohr,
   -- von dem zwei zueinander parallele, zu Schwingungen in dieser Ebene anzuregende Schenkel in jeweils einer an der Grundplatte angebrachten Halterung befestigt sind,
- mit je einem an jedem Schenkel angebrachten Erreger der Schwingungen,
- mit je zwei an jedem Schenkel in der Nähe der jeweiligen Halterung angeordneten Sensoren für die Schwingungen jedes Schenkels, und
- mit einer Erregungs/Auswerte-Elektronik,
   -- die eine Teilschaltung zur Eliminierung von auf äußeren Schwingungen beruhenden Störsignalen enthält.

Bei diesem Massedurchflußmesser wird also versucht, die eingangs erwähnten rohrleitungs-bedingten Störungen durch schaltungstechnische Mittel zu beseitigen, wobei allerdings die mit der Schwingung des Meßrohrs gleichfrequenten Anteile nicht beseitigbar sind. Im übrigen läßt der konstruktive Aufbau des Massedurchflußmessers keine der Störungsunterdrückung insgesamt dienende Maßnahmen erkennen.

In der DE-A 38 24 351 ist ferner ein Massedurchflußaufnehmer nach dem Coriolis-Prinzip beschrieben, der in eine Rohrleitung einfügbar ist und im Betrieb von einem zu messenden Fluid durchströmt wird,
- mit einem mit der Rohrleitung über einen Fluid-Einlaß bzw. einen Fluid-Auslaß zu verbindenden, schwingungssteifen Gehäuse,
- mit einem einzigen, in einer Ebene gebogenen, vom Fluid durchströmten, in den Fluid-Einlaß und in den Fluid-Auslaß mündenden und dadurch mit dem Gehäuse starr verbundenen Meßrohr,
   -- das zu Schwingungen senkrecht zur Ebene mittels eines Erregers anzuregen ist, und
- mit mindestens je einem am Meßrohr in Richtung zum Fluid-Einlaß bzw. zum Fluid-Auslaß angeordneten Sensor für die Schwingungen.

Bei dieser Anordnung soll die starre Verbindung des Meßrohrs mit dem schwingungssteifen Gehäuse, also eine mechanische Maßnahme, dazu dienen, die erwähnten äußeren Störungen vom Meßrohr fernzuhalten. Es hat sich jedoch gezeigt, daß damit keine ausreichende Unterdrückung äußerer Strörungen erreicht werden kann.

Es ist daher ein Ziel der Erfindung, einen Coriolis-Massedurchflußaufnehmer anzugeben, der mittels weiterer mechanischer Maßnahmen möglichst unanfällig gegenüber den genannten äußeren Störungen gemacht ist.

Hierzu besteht die Erfindung daher in einem Massedurchflußaufnehmer nach dem Coriolis-Prinzip, der in eine Rohrleitung einfügbar ist und im Betrieb von einem zu messenden Fluid durchströmt wird,
- mit einem mit der Rohrleitung über einen Fluid-Einlaß bzw. einen Fluid-Auslaß zu verbindenden Gehäuse,
- mit einer innerhalb des Gehäuses angeordneten Grundplatte,
   -- die mit dem Gehäuse über mindestens ein mechanisches Dämpfungselement verbunden ist,
      --- das an einer Schwingungs-Knotenlinie der Grundplatte befestigt ist,
- mit einem einzigen, in einer zu einer Oberseite der Grundplatte parallelen Ebene gebogenen, vom Fluid durchströmten, in den Fluid-Einlaß und in den Fluid-Auslaß mündenden Meßrohr,
   -- von dem ein zu Schwingungen senkrecht zur Ebene anzuregendes Teilrohr mittels im Bereich von einander gegenüberliegenden Rändern der Grundplatte angeordneten Fixierungen an dieser befestigt ist und
   -- von dem je ein Verbindungsteilrohr von jeder Fixierung zum Fluid-Einlaß bzw. zum Fluid-Auslaß führt,
- mit einem Erreger der Schwingungen und
- mit mindestens je einem in der Nähe der jeweiligen Fixierung angeordneten Sensor für die Schwingungen des Teilrohrs.

Nach einer Ausgestaltung der Erfindung ist das Teilrohr in Form eines Kreissegments gebogen, wobei bevorzugt jedes Verbindungsteilrohr mit einem kleineren Krümmungsradius als das Teilrohr gebogen sein kann.

Nach einer Weiterbildung der Erfindung kann mindestens ein weiteres Dämpfungselement an derjenigen Linie der Grundplatte angeordnet sein, an der eine Symmetrie-Ebene von Grundplatte und Teilrohr deren Unterseite schneidet.

Nach einer bevorzugten Ausgestaltung der Erfindung kann das Meßrohr eine Nennweite von kleiner als 10 mm haben, und/oder die Masse der Grundplatte kann groß gegenüber der Masse des Teilrohrs sein.

Ein wesentlicher Vorteil der Erfindung besteht darin, daß durch die von ihr vorgeschlagene und als innere Schwingungskompensation verstehbare Lösung des genannten Problems praktisch keine Schwingungsanteile vom mit einer aktuellen Frequenz schwingenden Meßrohr auf die Rohrleitung übertragen werden.

Die Erfindung wird nun anhand der Figuren der Zeichnung näher erläutert, in der ein Ausführungsbeispiel ungefähr maßstabsgerecht dargestellt ist und in der gleiche Teile mit denselben Bezugszeichen bezeichnet sind.
- Fig. 1 zeigt: im Längsschnitt eine Seitenansicht eines Massedurchflußaufnehmers, und
- Fig. 2 zeigt: eine Draufsicht auf den Massedurchflußaufnehmer von Fig. 1 nach Abnahme eines Gehäuse-Oberteils.

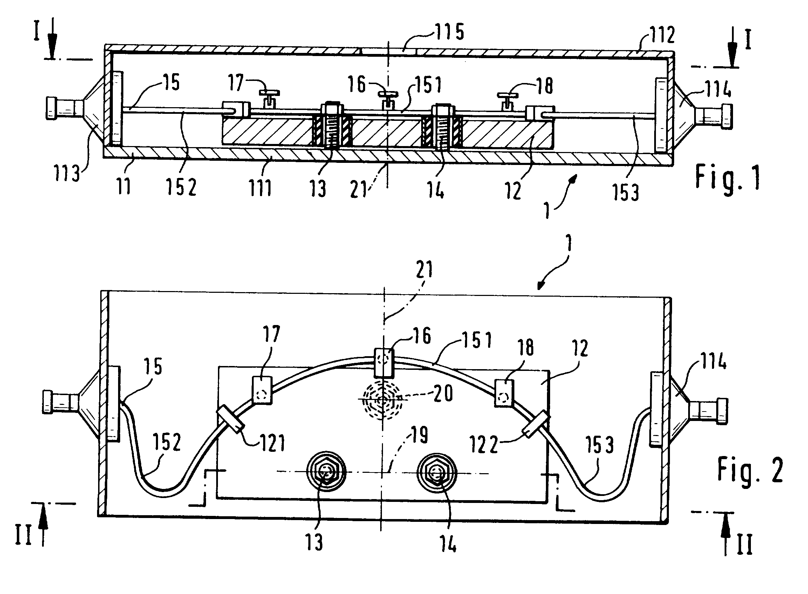

Ein gemäß Fig. 1 und 2 in (entlang der Linie II - II von Fig. 2) geschnittener Seitenansicht bzw. in Draufsicht (entlang der Linie I - I von Fig. 1) dargestellter Massedurchflußaufnehmer 1, der auf dem Coriolis-Prinzip beruht und der in eine nicht dargestellte Rohrleitung, z.B. mittels Flanschen oder Gewinde-Verbindungen, einfügbar ist, wird im Betrieb von einem zu messenden Fluid durchströmt und hat ein Gehäuse 11, in dem seine wesentlichen Teile zum Schutz vor Umwelteinflüssen angeordnet sind.

Wie aus den Figuren ersichtlich ist, kann der Massedurchflußaufnehmer des Ausführungsbeispiels so in die nicht dargestellte Rohrleitung eingefügt werden, daß er mit dieser axial fluchtet.

Das Gehäuse 11 kann, wie in den Fig. 1 und 2 angedeutet ist, aus mehreren Teilen zusammnengesetzt sein, nämlich aus einem Unterteil in Form von z.B. einer Bodenplatte 111, aus einem Oberteil 112, aus einem Fluid-Einlaß 113 und einem Fluid-Auslaß 114. Diese Teile sind im fertigen Zustand des Massedurchflußaufnehmers fest und unlösbar miteinander verbunden.

Um benötigte elektrische Leitungen trotzdem in das Gehäuse hinein- bzw. daraus herausführen zu können, ist im Oberteil 112 eine Öffnung 115 vorgesehen, in die eine geeignete Leitungsdurchführung dicht eingesetzt werden kann.

Innerhalb des Gehäuses 11 ist eine Grundplatte 12 angeordnet, die damit, im Ausführungsbeispiel mit der Bodenplatte 111, über mindestens ein mechanisches Dämpfungselement - in Fig. 1 und 2 sind es die beiden Dämpfungselemente 13, 14 - verbunden ist.

Die Grundplatte 12 ist also nicht fest, sondern lediglich so am Gehäuse 11 fixiert, daß sie zwar in allen Richtungen noch gegenüber dem Gehäuse 11 beweglich ist, Bewegungen jedoch, insb. Stöße oder Schwingungen, die vom Gehäuse ausgehen, allenfalls nur stark gedämpft auf die Grundplatte 12 übertragen werden; sie hält daher einen Abstand zur Bodenplatte 111 ein.

Parallel zu einer Oberseite der Grundplatte 12 verläuft ein einziges Meßrohr 15, das in einer zu dieser Oberseite parallelen Ebene gebogen und vom Fluid durchströmt ist. Das Meßrohr 15 mündet in den Fluid-Einlaß 113 und in den Fluid-Auslaß 114.

Im Bereich der Grundplatte 12 hat das Meßrohr 15 ein Teilrohr 151, das bevorzugt die Form eines Kreissegments hat und das mittels eines Erregers 16, z.B. mittels eines elektromagnetischen, insb. elektrodynamischen, Erregers, zu Schwingungen senkrecht zur Ebene, in der das Meßrohr 15 gebogen ist, angeregt wird. Die Masse der Grundplatte 12 ist bevorzugt groß gegenüber der Masse des Teilrohrs 151.

Es kann kann eine der üblichen Erregerschaltungen zur Erregung der Schwingungen dienen, die die Nutz-Schwingungen des Teilrohrs 151 und somit des Meßrohrs 15 sind. Das Teilrohr 151 ist an einander gegenüberliegenden Rändern der Grundplatte 12 mittels Fixierungen 121, 122 an dieser befestigt.

Von der jeweiligen Fixierung 121, 122 führt jeweils ein Verbindungsteilrohr 152, 153 zuin Fluid-Einlaß 113 bzw. zum Fluid-Auslaß 114. Dabei ist bevorzugt der jeweilige Krümmungsradius der Verbindungsteilrohre 152, 153 kleiner als der Krümmungsradius des Teilrohrs 151.

In der Nähe der jeweiligen Fixierung 121, 122 ist am Teilrohr 151 jeweils ein Sensor 17, 18, z.B. jeweils ein elektromagnetischer, insb. elektrodynamischer Sensor, für dessen Schwingungen angeordnet. Aus den von den Sensoren erzeugten Signalen läßt sich durch Ermittlung von deren Phasen- oder Zeitdifferenz in üblicher Weise der Massedurchfluß bestimmen.

Die oben bereits erwähnten Dämpfungselemente 13, 14 sind an einer Schwingungs-Knotenlinie der Grundplatte 12 befestigt. Diese Schwingungs-Knotenlinie 19 ergibt sich, wenn man zunächst die Dämpfungselemente noch nicht anbringt und das aus dem Meßrohr 15 und der Grundplatte 12 bestehende Schwingungssystem, angeregt zur Nutz-Schwingung, frei schwingen läßt und die sich dann einstellende Schwingungs-Knotenlinie ermittelt, z.B. nach Art Chladnischer Klangfiguren sichtbar macht.

In Fig. 2 ist gestrichelt noch ein weiteres Dämpfungselement 20 eingezeichnet, das anstatt der Dämpfungselemente 13, 14 oder zusätzlich zu mindestens einem von ihnen vorgesehen werden kann. Das weitere Dämpfungselement 20 ist an derjenigen Linie 21 an der Grundplatte 12 angeordnet, an der eine Symmetrie-Ebene von Grundplatte 12 und Teilrohr 15 deren Unterseite schneidet.

## Patentansprüche

1. Massedurchflußaufnehmer (1) nach dem Coriolis-Prinzip, der in eine Rohrleitung einfügbar ist und im Betrieb von einem zu messenden Fluid durchströmt wird,
- mit einem mit der Rohrleitung über einen Fluid-Einlaß (113) bzw. einen Fluid-Auslaß (114) zu verbindenden Gehäuse (11),
- mit einer innerhalb des Gehäuses angeordneten Grundplatte (12),
-- die mit dem Gehäuse über mindestens ein mechanisches Dämpfungselement (13, 14) verbunden ist,
--- das an einer Schwingungs-Knotenlinie (19) der Grundplatte (12) befestigt ist,
- mit einem einzigen, in einer zu einer Oberseite der Grundplatte (12) parallelen Ebene gebogenen, vom Fluid durchströmten, in den Fluid-Einlaß (113) und in den Fluid-Auslaß (114) mündenden Meßrohr (15),
-- von dem ein zu Schwingungen senkrecht zur Ebene anzuregendes Teilrohr (151) mittels im Bereich von einander gegenüberliegenden Rändern der Grundplatte angeordneten Fixierungen (121, 122) an dieser befestigt ist und
-- von dem je ein Verbindungsteilrohr (152, 153) von jeder Fixierung zum Fluid-Einlaß bzw. zum Fluid-Auslaß führt,
- mit einem Erreger (16) der Schwingungen und
- mit mindestens je einem in der Nähe der jeweiligen Fixierung angeordneten Sensor (17, 18) für die Schwingungen des Teilrohrs.

2. Massedurchflußaufnehmer nach Anspruch 1, bei dem das Teilrohr (151) in Form eines Kreissegments gebogen ist.

3. Massedurchflußaufnehmer nach Anspruch 2, bei dem jedes Verbindungsteilrohr (152, 153) mit einem kleineren Krümmungsradius als das Teilrohr (151) gebogen ist.

4. Massedurchflußaufnehmer nach einem der Ansprüche 1 bis 3, bei dem mindestens ein weiteres Dämpfungselement (20) an derjenigen Linie (21) der Grundplatte (12) angeordnet ist, an der eine Symmetrie-Ebene von Grundplatte und Teilrohr (151) deren Unterseite schneidet.

5. Massedurchflußaufnehmer nach einem der Ansprüche 1 bis 4, bei dem das Meßrohr (15) eine Nennweite von kleiner als 10 mm hat.

6. Massedurchflußaufnehmer nach einem der Ansprüche 1 bis 5, bei dem die Masse der Grundplatte (12) groß gegenüber der Masse des Teilrohrs (151) ist.

## Claims

1. A mass flow sensor (1) based on the Coriolis principle which can be installed in a conduit and which during operation is traversed by a fluid to be measured, comprising:
- a casing (11) to be connected with the conduit via a fluid inlet (113) and a fluid outlet (114);
- a support base (12) disposed within the casing,
-- said support base being connected to the casing via at least one mechanical damping element (13, 14)
--- which is located on a nodal line (19) of vibration of the support base (12);
- a single measuring tube (15) which is traversed by the fluid and is bent in a plane parallel to a top side of the support base (12) and ends in the fluid inlet (113) and the fluid outlet (114);
-- a portion (151) of said measuring tube to be vibrated in a direction perpendicular to said plane being fixed to the support base by fixing means (121, 122) provided in the areas of opposite edges of the support base, and
-- two connecting portions (152, 153) of said measuring tube extending from the respective fixing means to the fluid inlet and the fluid outlet, respectively;
- a vibrator (16); and
- at least one respective sensor (17, 18) mounted near each of the fixing means for sensing the vibrations of the tube portion.

2. The mass flow sensor as claimed in claim 1 wherein the tube portion (151) is bent in the form of an arc of a circle.

3. The mass flow sensor as claimed in claim 2 wherein each of the connecting tube portions (152, 153) is bent with a smaller radius of curvature than the tube portion (151).

4. The mass flow sensor as claimed in anyone of claims 1 to 3 wherein at least one further damping element (20) is located on that line (21) of the support base (12) where a plane of symmetry of the support base and the tube portion (151) intersects the bottom side of the support base.

5. The mass flow sensor as claimed in anyone of claims 1 to 4 wherein the measuring tube (15) has a nominal diameter of less than 10 mm.

6. The mass flow sensor as claimed in anyone of claims 1 to 5 wherein the mass of the support base (12) is large compared to the mass of the tube portion (151).

## Revendications

1. Débitmètre massique (1) selon le principe de Coriolis, pouvant être introduit dans une conduite et traversé en fonctionnement par un fluide à mesurer,
- comportant un boîtier (11) à relier à la conduite par l'intermédiaire d'une entrée de fluide (113) ou d'une sortie de fluide (114),
- comportant une plaque de base (12) disposée à l'intérieur du boîtier,
-- qui est reliée au boîtier par l'intermédiaire d'au moins un élément d'amortissement (13, 14),
--- qui est fixée sur une ligne de noeuds de vibration (19) de la plaque de base (12),
- comportant un tube de mesure (15) unique, courbé dans un plan parallèle à une face supérieure de la plaque de base (12), traversé par le fluide, débouchant dans l'entrée (113) et la sortie (114) de fluide,
-- dont un tube partiel (151) devant être amené à vibrer perpendiculairement au plan est fixé sur la plaque de base au moyen de fixations (121, 122) disposées dans la zone de bords opposés de la plaque de base et
-- dont un tube partiel de liaison (152, 153) conduit de chaque fixation à l'entrée ou à la sortie de fluide,
- comportant un excitateur (16) de vibrations et
- comportant au moins un capteur (17, 18) disposé à proximité de chaque fixation, pour capter les vibrations du tube partiel.

2. Débitmètre massique selon la revendication 1, dans lequel le tube partiel (151) est courbé sous la forme d'un arc de cercle.

3. Débitmètre massique selon la revendication 2, dans lequel chaque tube partiel de liaison (152, 153) est courbé avec un rayon de courbure plus petit que le tube partiel (151).

4. Débitmètre massique selon l'une des revendications 1 à 3, dans lequel au moins un autre élément d'amortissement (20) peut être disposé sur la ligne (21) de la plaque de base (12) sur laquelle un plan de symétrie de la plaque de base et du tube partiel (151) coupe la face inférieure de ladite plaque.

5. Débitmètre massique selon l'une des revendications 1 à 4, dans lequel le tube de mesure (15) peut avoir une largeur nominale inférieure à 10 mm.

6. Débitmètre massique selon l'une des revendications 1 à 5, dans lequel la masse de la plaque de base (12) est importante par rapport à la masse du tube partiel (151).
